(19) Europäisches Patentamt
European Patent Office
Office européen des brevets

(11) **EP 3 614 305 B1**

(12) **FASCICULE DE BREVET EUROPÉEN**

(45) Date de publication et mention de la délivrance du brevet:
**08.11.2023 Bulletin 2023/45**

(21) Numéro de dépôt: **19306020.9**

(22) Date de dépôt: **20.08.2019**

(51) Classification Internationale des Brevets (IPC):
**G02B 5/04** *(2006.01)* **G06V 40/12** *(2022.01)*

(52) Classification Coopérative des Brevets (CPC):
**G02B 5/04; G06V 40/1394**

(54) **AUTHENTIFICATION PAR INDICE OPTIQUE**

AUTHENTIFIZIERUNG DURCH OPTISCHEN INDEX

AUTHENTICATION BY OPTICAL INDEX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.08.2018 FR 1857547**

(43) Date de publication de la demande:
**26.02.2020 Bulletin 2020/09**

(73) Titulaire: **Idemia Identity & Security France**
**92400 Courbevoie (FR)**

(72) Inventeurs:
• **FOURRE, Joël-Yann**
**92400 COURBEVOIE (FR)**
• **THIEBOT, Alain**
**92400 COURBEVOIE (FR)**
• **POUET, Marina**
**92400 COURBEVOIE (FR)**

(74) Mandataire: **Idemia**
**2, place Samuel de Champlain**
**92400 Courbevoie (FR)**

(56) Documents cités:
EP-A1- 2 495 697     US-A1- 2016 275 335
US-A1- 2018 032 827     US-B1- 9 400 916

• **HUAFENG DING ET AL: "Refractive indices of human skin tissues at eight wavelengths and estimated dispersion relations between 300 and 1600 nm", PHYSICS IN MEDICINE AND BIOLOGY, vol. 51, no. 6, 1 mars 2006 (2006-03-01), pages 1479-1489, XP055565577, Bristol GB ISSN: 0031-9155, DOI: 10.1088/0031-9155/51/6/008**

**Description**

La présente invention se rapporte à un procédé de détection de fraude pour authentifier qu'un objet dont l'image est acquise par un capteur d'empreintes papillaires est recouvert de peau humaine, et n'est donc pas une fraude, ou à l'inverse à détecter une fraude.

L'identification par empreintes digitales d'un doigt est une des techniques utilisées pour l'identification biométrique. Une image d'un doigt illuminé est acquise et analysée pour identifier un individu. La méthode la plus employée consiste à acquérir l'image du doigt lorsque celui-ci est apposé sur une surface, et à exploiter les interactions optiques entre le doigt et cette surface. C'est notamment le cas de la méthode dite de réflexion totale interne, plus connue sous l'acronyme de TIR pour l'anglais "Total Internal Reflection", dans laquelle on exploite les différences d'indices de réfraction entre l'air et la peau humaine pour mettre en évidence les crêtes et les sillons des empreintes digitales.

Dans les procédés d'identification, une image d'un doigt illuminé est acquise et analysée pour identifier un individu. Cependant, il est possible d'utiliser des leurres, des faux doigts reproduisant les caractéristiques sur la base desquelles se fondent l'analyse de l'image, et en particulier reproduisant les empreintes digitales. La forme la plus simple pour frauder un capteur biométrique basé sur l'analyse de la surface d'un doigt humain consiste à présenter au capteur une reproduction papier d'un doigt humain présentant des empreintes digitales. Ainsi, dans le cas courant d'une détection des empreintes digitales, il s'agit de présenter une photographie, présentée plane ou enroulée autour d'un doigt, sur laquelle est reproduite un doigt avec ses empreintes digitales. Une forme plus évoluée consiste à disposer, à la surface d'un doigt présenté au capteur, un leurre en silicone ou autre matériau tel que gélatine ou latex, ledit leurre reproduisant des empreintes digitales. Il est donc nécessaire de prévoir en sus un procédé de validation pour valider que l'objet analysé est bien un élément du corps humain, le plus souvent un doigt.

Différents procédés de validation ont été proposés, faisant en général appel à diverses propriétés d'un doigt vivant plus ou moins difficiles à reproduire. Ces procédés visent à détecter les fraudes en exploitant diverses caractéristiques de l'objet présenté, telles que l'impédance, les capacités d'absorption et de diffusion de l'objet. Par exemple, une solution décrite par la demande FR2849246 A1 prévoit de mesurer l'impédance de l'objet à authentifier afin de détecter les fraudes. Le document US 2016/275335 A1 traite d'un procédé de détection de fraude pour authentifier qu'un objet est recouvert de peau humaine, qui est basé sur l'exploitation des capacités d'absorption et de diffusion de l'objet. Ce document ne traite que des rayons lumineux qui ont rencontrés l'objet présenté. Le document US 9400916 B1 décrit que l'éclairage de la surface sur laquelle est apposé le doigt par la lumière additionnelle se fait de manière directe. Cette lumière additionnelle est configurée pour éclairer seulement une partie de l'emplacement d'accueil, de sorte que celui-ci présente une zone illuminée et une zone non illuminée, au moyen d'un trou dans un écran noir. Tous les rayons d'éclairage émis par la lumière additionnelle arrivant à la surface traversent celle-ci. Il n'y a pas de réflexion à l'interface car il n'y a pas de rayons lumineux incidents éclairant l'emplacement d'accueil formant avec ladite surface une pluralité d'angles d'incidence englobant au moins un angle critique. Ainsi, aucun de ces documents ne décrit une détection de fraude basée sur l'indice de réfaction de l'objet rencontré, et de fait aucun de ces documents ne décrit une réflexion à l'interface objetsurface car il n'y a pas de rayons lumineux incidents éclairant l'emplacement d'accueil formant avec ladite surface une pluralité d'angles d'incidence englobant au moins un angle critique, qui permettrait de détecter l'indice de réfraction de l'objet.

Cependant, outre l'efficacité variable de ces procédés, ceux-ci nécessitent généralement des dispositifs complexes, coûteux et encombrants. De plus, ils requièrent parfois une utilisation spécifique, comme par exemple une certaine pression du doigt, et la qualité de l'authentification dépend alors également du comportement de l'utilisateur. D'autres encore nécessite des modifications lourdes des configurations des capteurs conventionnels, comme par exemple la nécessité de prévoir des électrodes transparentes permettant un contact électrique avec l'objet à authentifier.

Par ailleurs, des procédés d'authentification impliquant l'usage de filtres polarisants, outre le coût et la complexité de leur optique, engendre une perte sensible de luminosité pour l'image acquise. Enfin, des procédés d'authentification ne permettent pas de mettre en oeuvre d'autres procédés biométriques comme la reconnaissance d'empreintes digitales, ce qui requiert la cohabitation de plusieurs imageurs et alourdit la démarche.

PRESENTATION DE L'INVENTION

L'invention a pour but de remédier au moins en partie à ces inconvénients et préférentiellement à tous, et vise notamment à proposer un procédé permettant de détecter facilement la plupart des fraudes, sans nécessiter de structure complexe ni de modification majeure d'un capteur conventionnel. L'invention permet de détecter les fraudes dans un matériau dont l'indice optique de réfraction ne correspond pas à celui d'une peau humaine authentique, et dont la diffusion de la lumière serait différente de celle de la peau humaine authentique.

A cet effet, il est proposé un procédé de détection de fraude pour authentifier qu'un objet est recouvert de peau humaine, comme défini dans la revendication 1.

Le procédé permet de d'authentifier qu'un objet est recouvert de peau humaine sur la base de l'indice de réfraction présenté par l'objet, estimé à partir des phénomènes de réflexion totale à la surface où est disposé l'objet. Le procédé permet de détecter facilement la plupart des fraudes, sans nécessiter de structure complexe ni de modification majeure d'un capteur conventionnel.

Le procédé est avantageusement complété par les caractéristiques suivantes, prises seules ou en quelconque de leurs combinaisons techniquement possibles :

- la caractéristique de référence correspond à un trajet lumineux comprenant un angle critique défini par l'indice de réfraction $n_{milieu}$ du milieu de propagation et par un indice de réfraction attendu pour une peau humaine authentique ;
- la caractéristique dérivée du profil d'intensité lumineuse est représentative d'une décroissance de l'intensité lumineuse dans le profil d'intensité lumineuse ;
- la caractéristique dérivée du profil d'intensité lumineuse est une position de décroissance de l'intensité lumineuse dans le profil d'intensité lumineuse, et la caractéristique de référence est une position de référence ;
- la position de décroissance est comparée à une plage d'extinction délimitée par une première position de référence correspondant à un indice de réfraction maximal attendu pour une peau humaine authentique et une deuxième position de référence correspondant à un indice de réfraction minimal attendu pour une peau humaine authentique, et

  - l'objet est déterminé comme étant recouvert de peau humaine authentique si la position de décroissance se trouve dans la plage d'extinction,
  - l'objet est déterminé comme n'étant pas un doigt humain authentique si la position de décroissance se trouve hors de la plage d'extinction.

- l'indice de réfraction attendu pour de la peau humaine authentique est inférieur ou égal à un indice de réfraction attendu maximal $n_{max}$ et la pluralité d'angles d'incidence formés par les rayons lumineux comprend des angles d'incidence $\alpha$ supérieurs à

$$\sin^{-1}\left(\frac{n_{max}}{n_{milieu}}\right)$$

avec $n_{max}$ inférieur ou égal à 1,48 et supérieur ou égal à 1,42 ;
- l'indice de réfraction attendu pour de la peau humaine authentique est supérieur ou égal à un indice de réfraction attendu minimal $n_{min}$ et la pluralité d'angles d'incidence formés par les rayons lumineux comprend des angles d'incidence $\alpha$ inférieurs à

$$\sin^{-1}\left(\frac{n_{min}}{n_{milieu}}\right)$$

avec $n_{min}$ supérieur ou égal à 1,38 et inférieur ou égal à 1,44 ;
- la caractéristique dérivée est une forme du profil d'intensité lumineuse, et la détermination de la correspondance entre l'objet et une peau humaine authentique comprend la comparaison de la forme du profil d'intensité lumineuse avec une pluralité de profils de référence correspondant à des caractéristiques optiques connues, lesdites caractéristiques optiques connues comprenant au moins des indices de réfraction ;
- les rayons lumineux incidents éclairant l'emplacement d'accueil de la surface sont dans des longueurs d'onde inférieures à 600 nm ;
- des rayons lumineux incidents éclairant l'emplacement d'accueil de la surface sont dans des longueurs d'onde inférieures à 600 nm, et d'autres rayons lumineux incidents éclairant l'emplacement d'accueil de la surface sont dans des longueurs d'onde supérieures à 600 nm.

L'invention concerne également un produit programme d'ordinateur comprenant des instructions de code de programme pour l'exécution des étapes du procédé selon l'un quelconque des modes de réalisation de l'invention lorsque ledit programme est exécuté par un ordinateur.

L'invention concerne enfin un système d'analyse biométrique d'un objet à authentifier comme recouvert de peau humaine, comme défini dans la revendication 12.

PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :

- la figure 1 montre schématiquement une vue d'ensemble d'un capteur mettant en oeuvre le procédé selon un mode de réalisation possible de l'invention,
- la figure 2 montre schématiquement une vue d'ensemble d'un capteur mettant en oeuvre le procédé selon un mode de réalisation possible de l'invention, dans lequel le milieu de propagation prend la forme d'un prisme,
- les figures 3, 4, et 5 montrent de façon schématique des exemples d'images obtenues pour des objets présentant différents indices de réfraction,
- les figures 6, 7, et 8 montrent de façon schématique des exemples de profils d'intensité lumineuse en fonction de la distance à la source lumineuse pour plusieurs objets différents.

## DESCRIPTION DETAILLEE

Comme indiqué plus haut, les fraudes visant à tromper un capteur d'empreintes digitales utilisent généralement des faux doigts reproduisant différentes caractéristiques d'un doigt humain authentique (empreintes digitales, formes et couleurs). Toutefois, les caractéristiques optiques de la peau humaine sont difficiles à contrefaire. En particulier, l'indice de réfraction de la peau humaine et ses caractéristiques d'absorption et de diffusion de la lumière sont difficiles à reproduire fidèlement. L'invention vise donc à détecter les tentatives de fraude en exploitant les différences d'indice de réfraction entre la peau humaine authentique et un leurre. Afin de mettre en évidence de façon simple et fiable l'indice de réfraction de l'objet présenté à la surface d'un capteur biométrique, l'invention propose d'éclairer l'objet présenté d'une façon particulière, et d'en exploiter les résultats.

*Capteur*

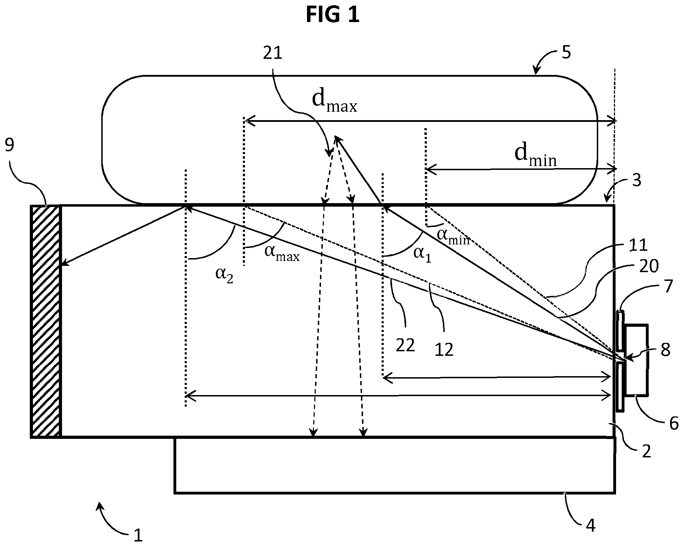

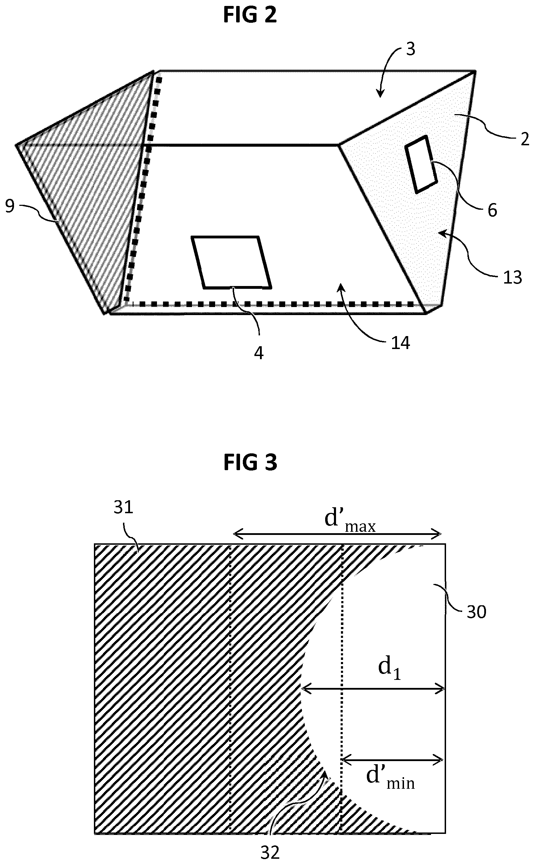

L'invention est mise en oeuvre au moyen d'un système comprenant un capteur biométrique d'empreintes digitales. En référence aux figures 1 et 2, le capteur biométrique comprend un milieu de propagation 2 généralement formé par un prisme ou une lame, de préférence une lame avec une face de sortie prismatique comme par exemple celle décrite dans les demandes FR2862408 ou FR2861200, dans un matériau transparent présentant un indice de réfraction $n_{milieu}$ supérieur à celui d'une peau humaine, et donc supérieur à 1,40 (à 589 nm), et de préférence supérieur à 1,47, voire 1,49. Le milieu de propagation 2 peut par exemple être en verre ou en polyméthacrylate de méthyle.

La table suivante donne des indices de réfraction de matériaux usuels à 589 nm, pouvant être utilisés pour constituer le milieu de propagation 2 :

Table 1

| Verre N-BK7 (Shott) | 1.5168 |
|---|---|
| PMMA | 1,4917 |
| PolyCarbonate | 1,585 à 1,586 |
| Verre N-SF4 (Shott) | 1,7551 |
| Zeonex ® | 1,53 |
| Silice fondue | 1.4584 |

Le milieu de propagation 2 présente une surface 3 destinée à recevoir l'objet 5 dont on cherche à vérifier le fait qu'il s'agisse de peau humaine authentique. En l'absence d'un tel objet 5, cette surface 3 forme une interface entre le milieu de propagation 2 et l'air. Un emplacement d'accueil est prévu sur la surface 3 pour le positionnement de l'objet 5 à authentifier. Il s'agit généralement d'une position au centre de la surface 3. Il peut être prévu un procédé de détection de présence qui analyse une image acquise pour vérifier le positionnement de l'objet 5 à authentifier sur l'emplacement qui lui est dédié, et pour alerter l'utilisateur en cas de mauvais positionnement, c'est-à-dire lorsque l'objet 5 à authentifier ne recouvre pas l'emplacement d'accueil. En fonction du type de capteur biométrique, l'objet 5 à authentifier attendu sur l'emplacement d'accueil peut par exemple prendre la forme d'un doigt, de plusieurs doigts, d'une paume de main, ou d'une main entière. La forme et l'étendue de l'emplacement prévu pour le positionnement de l'objet 5 à authentifier varie en conséquence.

Le capteur comprend également un imageur 4 configuré pour acquérir au moins une image de la surface 3 sur laquelle repose l'objet 5 à authentifier. Dans l'exemple illustré par la figure 1, l'imageur 4 est disposé en face de la surface 3, de l'autre côté du milieu de propagation 2. L'imageur 4 est disposé pour recevoir la lumière diffusée dans l'objet 5 posé sur la surface 3, et ne pas recevoir la lumière provenant des rayons lumineux totalement réfléchis à la surface 3 du milieu de propagation 2 qui seront absorbée par l'écran absorbant 9. D'autres dispositions sont cependant possibles.

Notamment, il est possible de modifier la configuration présentée afin de limiter la réception par l'imageur de rayons externes via la surface 3. Dans la configuration illustrée par la figure 2, le milieu de propagation 2 prend la forme d'un prisme présentant la surface 3, une face latérale 13 et une face avant 14. Sur une face latérale opposée à la face latérale 13 se trouve l'écran absorbant 9. La face avant 14 et la face arrière qui lui fait face sont inclinées par rapport à la surface 3, formant un angle de 40 à 70° par rapport à la surface 3. Les rayons provenant de l'extérieur traversant la surface 3 avec ayant un angle incident par rapport à la normale inférieur de l'angle critique de réflexion totale lorsque le milieu externe est de l'air traversent le milieu de propagation 2 jusqu'à la face opposée à la surface 3. Seuls les rayons fortement inclinés après être sortis de l'objet 5 placé sur la surface 3 rebondissent entre la face avant 14 et la face arrière jusqu'à atteindre l'imageur 4.

Dans tous les cas, une source lumineuse 6 est disposée de sorte à émettre des rayons lumineux dans le milieu de propagation 2 en direction de la surface 3 pour éclairer l'emplacement destiné à recevoir l'objet 5. Dans les exemples illustrés, la source lumineuse 6 est sur un côté du milieu de propagation 2, tandis que la surface 3 est en haut et que l'imageur 4 est en bas du milieu de propagation 2. D'autres configurations peuvent être envisagées, par exemple en utilisant des surfaces réfléchissantes de renvoi. La source lumineuse 6 peut par exemple être une diode électroluminescente ou une diode laser. De préférence, la source lumineuse 6 émet de la lumière selon un faisceau non collimaté, avec un cône d'émission présentant une certaine richesse d'angles. Si la divergence intrinsèque d'une diode laser n'est pas suffisante, il est possible d'augmenter cette divergence avec une lentille devant la source lumineuse 6.

De préférence, la source lumineuse 6 présente une surface d'émission lumineuse inférieure à 1 mm de diamètre. Afin de restreindre la surface d'émission lumineuse de la source lumineuse 6 dans le cas d'une diode électroluminescente par exemple, un cache 7 peut être présent entre la source lumineuse 6 et le milieu de propagation 2, ledit cache 7 présentant une ouverture 8 laissant passer dans le milieu de propagation 2 des rayons lumineux en provenance de la source lumineuse 6 et dirigés vers la surface 3.

La source lumineuse 6 est configurée pour émettre des rayons lumineux se propageant dans le milieu de propagation 2. De préférence, ces rayons lumineux sont dans des longueurs d'onde inférieures à 600 nm, et de préférence encore inférieures à 560 nm, afin de limiter la propagation de la lumière dans l'objet à authentifier. En effet, la lumière verte ou bleue est beaucoup plus absorbée que la lumière rouge par les tissus humains (dont la peau), ce qui lui permet de se propager moins loin dans ces tissus, et donc la peau réémet moins de lumière en dehors de zones directement éclairées.

La source lumineuse 6 est configurée pour éclairer l'emplacement d'accueil de la surface 3 à travers le milieu de propagation 2 par des rayons lumineux se propageant dans le milieu de propagation 2, lesdits rayons lumineux éclairant l'emplacement d'accueil formant avec la normale à ladite surface 3 une pluralité d'angles d'incidence $\alpha$. La pluralité d'angles d'incidence formés par les rayons lumineux éclairant l'emplacement d'accueil englobe au moins un angle critique défini par l'indice de réfraction $n_{milieu}$ du milieu de propagation et par un indice de réfraction attendu pour une peau humaine authentique. De préférence, la pluralité d'angles d'incidence formés par les rayons lumineux englobe également au moins un angle critique défini par l'indice de réfraction $n_{mlilieu}$ du milieu de propagation et par un indice de réfraction ne correspondant pas à une peau humaine authentique. Les rayons lumineux issus de la source lumineuse 6 présentent ainsi des angles d'incidence s'étendant d'au moins un côté dudit angle critique, et de préférence des deux côtés, c'est-à-dire des angles d'incidence supérieurs et/ou inférieurs à cet angle critique.

De préférence, la pluralité d'angles d'incidence formés par les rayons lumineux englobe une pluralité, et de préférence l'ensemble des angles critiques définis par l'indice de réfraction $n_{milieu}$ du milieu de propagation et par une plage d'indices de réfraction attendus pour une peau humaine authentique. Les rayons lumineux issus de la source lumineuse 6 présentent alors des angles d'incidence compris dans l'ensemble d'angles critiques et des angles d'incidence au-dehors dudit ensemble d'angles critiques, inférieur ou supérieur.

Les angles critiques définis par l'indice de réfraction $n_{mlilieu}$ du milieu de propagation et par une plage d'indices de réfraction attendus pour une peau humaine authentique définissent une plage angulaire de criticité, qui est délimitée par un angle d'incidence $\alpha_{min}$ formé avec la surface 3 par un premier trajet lumineux 11 et par un angle d'incidence $\alpha_{max}$ avec la surface 3 par un deuxième trajet lumineux 12. Comme indiqué ci-dessus, les rayons lumineux issus de la source lumineuse 6 forment une pluralité d'angles d'incidence avec la surface 3 dont au moins certains font partie de la plage angulaire de criticité. De préférence, les rayons lumineux issus de la source lumineuse 6 forment une pluralité d'angles d'incidence dont au moins certains sont supérieurs aux angles de la plage angulaire de criticité, c'est-à-dire des angles d'incidence $\alpha$ supérieurs à $\alpha_{max}$. De préférence également, les rayons lumineux issus de la source lumineuse 6 forment une pluralité d'angles d'incidence dont au moins certains sont inférieurs aux angles de la plage angulaire de criticité, c'est-à-dire des angles d'incidence $\alpha$ inférieurs à $\alpha_{min}$.

Seule une partie des rayons lumineux en provenance de la source lumineuse 6 passe par l'ouverture 8, le reste des rayons lumineux étant bloqués par le cache 7. De ce fait, les rayons lumineux en provenance de la source lumineuse 6 se propageant dans le milieu de propagation 2 présentent des angles d'incidence assez proche sur la surface 3. Autrement dit, le cache permet de restreindre l'étendue angulaire de l'origine des rayons lumineux vue depuis un point de la surface 3 éclairé par la source lumineuse. Ainsi, un point de la surface 3 éclairé par la source lumineuse reçoit des rayons lumineux avec des angles d'incidences proches les uns des autres. La faible dispersion des angles d'incidences en un point de la surface 3 permet d'obtenir une différenciation plus nette entre les différentes zones de la surface 3 apparaissant dans l'image acquise par l'imageur 4.

Par ailleurs, il est possible que l'ensemble des angles d'incidences envisagés ne puisse être obtenu avec une seule configuration d'émission lumineuse. Le cache 7 peut alors être un cache mobile ou un écran à cristaux liquide dont le masquage est modifié, et l'ouverture 8 peut alors être déplacée par rapport à la source lumineuse 6 afin de modifier les angles d'incidence des rayons lumineux. Il est également possible de prévoir que la source lumineuse 6 soit constituée d'une pluralité de sources d'éclairage placées à différentes positions par rapport à la surface 3, et en particulier à différentes hauteurs par rapport à la surface 3. L'émission des rayons lumineux peut alors être effectuée en plusieurs fois, en modifiant la configuration d'émission, par exemple au moyen du cache 7 ou en changeant de source. On peut également utiliser un laser balayant la surface 3, par exemple pendant la durée d'intégration de l'imageur 4.

Il est particulièrement avantageux d'utiliser plusieurs sources d'éclairage, par exemple des diodes électroluminescentes, même de même couleur, disposées à différents endroits. Cela permet notamment de faire face à un cas où l'objet 5 ne serait pas parfaitement disposé à l'emplacement prévu sur la surface 3 et/ou de consolider plusieurs mesures chacune faite avec un éclairage différent. On peut notamment prévoir de placer des sources d'éclairage sur des côtés opposés d'un prisme ou d'une lame constituant le milieu de propagation 2. On peut également utiliser des sources d'éclairage de plusieurs couleurs, de préférence avec des sources d'éclairage émettant dans des longueurs d'onde inférieures à 600 nm et d'autres sources d'éclairage émettant dans des longueurs d'onde supérieures à 600 nm. Cela permet d'étudier le comportement de l'objet à plusieurs longueurs d'onde, sachant que la peau humaine ne réagit pas de manière identique aux différentes longueurs d'onde, et en particulier présente une absorption très différente aux longueurs d'onde inférieures à 600 nm et aux longueurs d'onde supérieures à 600 nm.

L'utilisation d'une longueur d'onde inférieure à 600 nm permet d'obtenir un profil d'intensité avec une décroissance raide et une limite plus nette. On peut mieux ainsi détecter les fraudes utilisant un matériau diffusant dans le vert. A l'inverse, une longueur d'onde supérieure à 600nm permet d'obtenir un profil d'intensité avec une décroissance moins raide du profil d'intensité, et une limite plus floue. On peut néanmoins ainsi mieux détecter les fraudes utilisant un matériau diffusant et/ou absorbant dans le rouge.

Il est ainsi possible d'utiliser plusieurs sources d'éclairage émettant simultanément dans des couleurs différentes (notamment en dessous de 600 nm et au-dessus de 600 nm), avec un imageur couleur 4 acquérant une image pour chaque couleur, par exemple au moyen d'un filtre de Bayer. Il est également possible d'utiliser plusieurs sources d'éclairage émettant séquentiellement dans différentes longueurs d'ondes ou en étalement d'angles différents, et en acquérant séquentiellement plusieurs images correspondantes. En particulier, on peut alors mettre en oeuvre les étapes de traitement du procédé pour plusieurs couleurs, et en consolider ensuite les résultats. On peut également combiner entre elles les différentes images obtenues, résultant en une image finale sur laquelle est appliqué le procédé de détection de fraude.

Par conséquent, selon différentes modalités, il est possible d'avoir des rayons lumineux incidents 20, 22 éclairant l'emplacement d'accueil de la surface 3 dans des longueurs d'onde inférieures à 600 nm, et d'autres rayons lumineux incidents 20, 22 éclairant l'emplacement d'accueil de la surface 3 dans des longueurs d'onde supérieures à 600 nm.

Il peut être avantageux pour améliorer la précision du procédé d'utiliser plusieurs configurations différentes de sources lumineuses 6, dans lesquels les rayons lumineux incidents à la surface 3 présente des angles d'incidence compris dans des plages respectives

$[\alpha_{min}^{i}; \alpha_{max}^{i}]$ différentes mais se chevauchant partiellement de sorte que l'union de ces plages recouvre la plage angulaire de criticité $[\alpha_{min},\ \alpha_{max}]$. Par exemple, dans une première configuration, on peut prévoir des angles d'incidence dans une plage $[\alpha_{min}^{1}; \alpha_{max}^{1}]$ avec

$\alpha_{min}^{1} < \alpha_{min}$ et $\alpha_{min} < \alpha_{max}^{1} < \alpha_{max}$ , puis une deuxième configuration avec des angles d'incidence dans une plage $[\alpha_{min}^{2}; \alpha_{max}^{2}]$ avec $\alpha_{min} < \alpha_{min}^{2} < \alpha_{max}$ et $\alpha_{max} < \alpha_{max}^{2}$.

La source lumineuse 6 peut avoir une répartition angulaire spécifique obtenue par des outils dioptriques, catadioptriques ou diffractifs. On peut par exemple chercher à avoir au niveau de l'emplacement d'accueil à accueillir l'objet 5 soit une répartition uniforme de la lumière soit un gradient spécifique d'intensité en fonction de la distance d à la source lumineuse 6.

Pour des raisons de clarté et de simplicité, la source lumineuse 6 est assimilée dans la suite de la description à une source ponctuelle, dans la mesure où le diamètre de la source lumineuse 6 (éventuellement restreint à l'ouverture 8) est généralement très inférieur à la distance entre la source lumineuse 6 et la surface 3.

L'indice de réfraction attendu pour une peau humaine authentique est inférieur ou égal à $n_{max}$ et la plage angulaire de criticité est alors délimitée par un angle critique maximal $\alpha_{max}$ qui vaut :

$$\alpha_{max} = \sin^{-1}\left(\frac{n_{max}}{n_{milieu}}\right)$$

De préférence, $n_{max}$ est inférieur ou égal à 1,48 et supérieur ou égal à 1,42 dans le domaine du visible.

De même, l'indice de réfraction attendu pour une peau humaine authentique est supérieur ou égal à $n_{min}$ et la plage angulaire de criticité est alors délimitée par un angle critique minimal $\alpha_{min}$ qui vaut :

$$\alpha_{min} = \sin^{-1}\left(\frac{n_{min}}{n_{milieu}}\right)$$

De préférence, $n_{min}$ est supérieur ou égal à 1,38 et inférieur ou égal à 1,44 dans le domaine du visible.

Typiquement, la peau humaine présente un indice de réfraction dans le domaine du visible compris entre 1,41 et 1,47. Ainsi, par exemple avec un milieu de propagation 2 présentant un indice de réfraction $n_{mlilieu}$ de 1,50, la plage angulaire de criticité peut être comprise entre 78° et 70°. Il est préférable que les indices de réfraction attendus pour la peau humaine soit choisis inférieurs à l'indice de réfraction $n_{milieu}$ du milieu de propagation ($n_{max} < n_{milieu}$). Par exemple, si $n_{milieu}$ est de 1,49, alors on peut restreindre $n_{max}$ à 1,47, voire 1,45. Comme l'indice de réfraction de la peau humaine diminue lorsque la longueur d'onde augmente, on pourra alors utiliser une longueur d'onde plus importante.

De préférence, le premier trajet lumineux 11 et le deuxième trajet lumineux 12 définissant la plage angulaire de criticité sont incidents à la surface 3 en des points appartenant à l'emplacement prévu pour recevoir l'objet 5 à authentifier. Ainsi qu'illustré sur la figure 1, le premier trajet lumineux 11 rencontre la surface 3 à une distance $d_{min}$ du côté d'émission où se trouve la source lumineuse 6, tandis que deuxième trajet lumineux 12 rencontre la surface 3 à une distance $d_{max}$ du côté d'émission où se trouve la source lumineuse 6. On constate évidemment que $d_{max} > d_{min}$. Il est à noter que c'est la distance à la source lumineuse 6 qui détermine l'angle d'incidence des rayons lumineux. La source lumineuse 6 étant ponctuelle ou en tout cas de faible étendue par rapport à la largeur de la surface 3, les points d'incidence de l'ensemble des premiers trajets lumineux 11 avec la surface 3 forment un arc de cercle sur la surface 3 avec la projection orthogonale de la source lumineuse 6 sur la surface 3 comme centre. Il en va de même pour les seconds trajets lumineux 12.

A titre d'exemple numérique donné à titre indicatif, avec une source lumineuse placé à une distance 11 mm de la surface 3, un milieu de propagation en polyméthacrylate de méthyle présentant un indice de réfraction de 1,49, et des indices de réfraction attendus pour une peau humaine authentique compris entre 1,36 et 1,42 pour une lumière verte à 525 nm, on obtient une distance $d_{min}$ de 24,6 mm et une distance $d_{max}$ de 34,6 mm, avec $\alpha_{max}$=72,4° et $\alpha_{min}$=65,9°.

L'orientation d'émission et l'angle d'émission (typiquement à mi-intensité) de la source lumineuse 6 peuvent être choisis afin d'améliorer la précision du procédé. Il peut être avantageux d'avoir un éclairage sur la surface 3 d'intensité croissante avec la distance d à la source lumineuse 6, au moins au niveau de l'emplacement destiné à recevoir l'objet. Par exemple, il est possible d'utiliser une source lumineuse 6 présentant un lobe d'émission avec un pic centré sur les distances plus élevées, et en particulier sur l'emplacement destiné à recevoir l'objet. Il est possible d'orienter la direction d'émission de la source lumineuse 6 vers l'emplacement de la surface 3 destinée à revoir l'objet 5. Sans orienter la direction d'émission la source lumineuse 6 vers l'emplacement de la surface 3 destinée à revoir l'objet 5, il est également possible de choisir une source lumineuse 6 avec un angle d'émission adéquat pour obtenir un maximum d'intensité lumineuse au niveau de l'emplacement de la surface 3 destinée à revoir l'objet 5.

A titre illustratif, on peut calculer l'intensité lumineuse arrivant en tout point de la surface 3 en fonction de la distance $d$ pour une source lumineuse 6 avec une orientation d'émission parallèle à la surface 3. Pour ce faire, on utilise la variable réduite $x = d/l$ où $l$ est la distance entre la source lumineuse 6 et la surface 3 (dans les exemples qui suivent, $l$=10,5 mm). On peut alors calculer l'intensité en fonction de x qui vaut :

$$I(x) = \frac{1}{(x^2 + 1)} * \sin(\beta) * I(\beta)$$

Où $\beta$ est l'angle formé par le rayon avec la surface 3 (d'où $\alpha + \beta = 90°$) et $I(\beta)$ l'intensité de la source pour cet angle.

On a $\beta = \cot^{-1}(x)$. D'où $\sin(\beta) = \frac{1}{\sqrt{x^2+1}}$. Si l'on modélise l'émission par $I(\beta) = I_0 * \cos(k * \beta)$, on a alors :

$$I(x) = \frac{1}{(x^2 + 1)^{3/2}} * \cos(k * \cot^{-1}(x))$$

Pour une source lambertienne (orthotrope), k=1, on a un maximum pour $x = \frac{1}{\sqrt{3}}$, soit d=6 mm environ.

Pour une source d'angle d'émission 60°, k=2, et un maximum d'émission est trouvé pour $x = \sqrt{\frac{7}{3}}$, soit $d$ = 16 mm environ. Pour un angle de 40°, on obtient $d$ = 27 mm environ.

Ainsi, dans le cas d'une source lumineuse 6 avec une orientation d'émission parallèle à la surface 3, il est possible de choisir une source lumineuse 6 avec un angle d'émission inférieur à 50°, voire à 40 °, en fonction de la position de la surface 3 à laquelle il est désiré d'avoir un maximum d'intensité lumineuse.

Le système comprenant également une unité de traitement comprenant un processeur, l'unité de traitement étant configurée pour déterminer la correspondance entre l'objet et une peau humaine authentique sur la base de l'indice de réfraction dudit objet, en fonction de la distribution spatiale de la lumière sur l'image acquise en comparant ladite distribution spatiale à une distribution spatiale attendue pour un doigt humain authentique selon l'invention décrite ici.

*Principe de l'invention*

Un objet 5 à authentifier disposé sur l'emplacement prévu à cet effet sur la surface 3 présente un indice de réfraction $n_{objet}$ dont on veut vérifier qu'il correspond à une valeur attendue pour une peau humaine authentique. L'interface entre la surface 3 et l'objet 5 à authentifier définit un angle critique objet $\alpha_{objet}$ par rapport à sa normale, en direction du milieu de propagation 2.

La source lumineuse 6 émet des rayons lumineux qui se propagent dans le milieu de propagation 2 en direction de la surface 3. Ces rayons lumineux rencontrent la surface 3 avec différents angles d'incidence $\alpha$. Parmi les rayons lumineux qui rencontrent la surface 3 à l'emplacement d'accueil, et donc face à l'objet 5 à authentifier, certains rayons lumineux présentent des angles d'incidence $\alpha$ qui sont dans la plage angulaire de criticité, c'est-à-dire compris entre $\alpha_{min}$ et $\alpha_{max}$, tandis que d'autres sont en-dehors de la plage angulaire, c'est-à-dire soit inférieurs à $\alpha_{min}$, soit supérieurs à $\alpha_{max}$.

Lorsque qu'un rayon lumineux 20 qui présente un angle d'incidence $\alpha_1$ inférieur à l'angle critique objet $\alpha_{objet}$ rencontre la surface 3 au niveau de l'emplacement où se trouve l'objet 5, ce rayon lumineux 20 traverse l'interface entre le milieu de propagation 2 et l'objet 5, et se propage dans l'objet 5 en fonction de ses propriétés optiques intrinsèques d'absorption et de diffusion à la longueur d'onde émise par la source lumineuse 6. L'interaction entre le rayon lumineux 20 et l'objet 5 produit des rayons diffusés 21 qui se propagent dans différentes directions. Une partie des rayons diffusés 21 se propage ainsi vers le milieu de propagation 2, traverse la surface 3, et à travers le milieu de propagation, atteint l'imageur 4.

Lorsqu'un rayon lumineux 22 qui présente un angle d'incidence $\alpha_2$ supérieur à l'angle critique objet $\alpha_{objet}$ rencontre la surface 3 au niveau de l'emplacement où se trouve l'objet 5, ce rayon lumineux 22 est totalement réfléchi par l'interface formé par la surface 3 entre le milieu de propagation 2 et l'objet 5 à authentifier. Le rayon lumineux 22 ne traverse donc pas cette interface et ne pénètre donc pas dans l'objet 5. Le rayon lumineux 22 réfléchi se propage dans le milieu de propagation 2 jusqu'à rencontrer un écran d'absorption 9 où il est absorbé. Comme dans les exemples illustrés, l'écran d'absorption 9 peut être avantageusement disposé sur un côté opposé à la source lumineuse 6, avec l'imageur 4 entre l'écran d'absorption 9 et la source lumineuse 6. L'écran d'absorption 9 est par exemple une couche d'encre noire.

Ainsi, l'objet 5 n'est éclairé que par les rayons lumineux présentant un angle d'incidence inférieur à l'angle critique objet $\alpha_{objet}$. Comme l'angle d'incidence $\alpha$ des rayons lumineux augmente avec la distance à la source lumineuse 6 de leur point d'incidence avec la surface 3, l'objet 5 est donc éclairé uniquement à l'intérieur d'un disque centré sur la projection orthogonale de la source lumineuse 6 sur la surface 3. La lumière renvoyée par l'objet 5 est maximale à l'intérieur de ce disque et décroît en s'éloignant du disque, avec une décroissance suivant l'absorption et la diffusion du milieu constituant l'objet 5. Pour une peau humaine authentique et une lumière bleue ou verte, cette décroissance est suffisamment rapide pour permettre de la distinguer facilement.

Par conséquent, l'imageur 4 ne reçoit que les rayons lumineux présentant un angle d'incidence inférieur à l'angle critique objet $\alpha_{objet}$ et qui ont pu traverser la surface 3 et se diffuser dans l'objet 5. L'imageur 4 acquiert donc une image à partir de la lumière de ces seuls rayons lumineux présentant un angle d'incidence inférieur à l'angle critique objet $\alpha_{objet}$. Comme l'angle d'incidence $\alpha$ des rayons lumineux augmente avec la distance à la source lumineuse 6 de leur point d'incidence avec la surface 3, cette discrimination au niveau des rayons lumineux reçus par l'imageur 4 se traduit spatialement dans l'image acquise par l'imageur 4. La distribution spatiale de la lumière sur l'image acquise dépend donc de l'angle critique objet $\alpha_{objet}$ défini par la surface 3 et l'objet 5 à authentifier, qui dépend essentiellement de l'indice de réfraction $n_{objet}$ de l'objet 5 à authentifier, ainsi que des autres propriétés optiques du milieu constitutif de l'objet 5. En effet, puisque l'objet 5 est généralement diffusant en volume, on peut avoir une frontière floue dans l'image, mais qui correspond toujours à la limite du disque d'éclairage de l'objet 5, tandis que d'autres caractéristiques de cette distribution spatiale telles que le flou de la frontière ou le maximum d'intensité dépendent des propriétés optiques d'absorption $\mu_a$ et de diffusion réduite $\mu_s'$ de l'objet à authentifier.

L'analyse de la distribution spatiale de la lumière sur l'image acquise permet ainsi de détecter si l'indice de réfraction $n_{objet}$ de l'objet 5 à authentifier correspond à un indice de réfraction attendu pour une peau humaine authentique, et donc de détecter une éventuelle fraude.

Les figures 3, 4, et 5 montrent des exemples simplifiés de distribution spatiale de la lumière sur l'image acquise dans différents cas de figure. Dans l'exemple illustré par la figure 3, l'image présente une zone claire 30 représentant la portion éclairée de l'objet 5. Cette portion d'image correspond à la partie de l'imageur 4 qui a reçu les rayons lumineux 21 diffusés dans l'objet 5 à authentifier, ces rayons lumineux 21 ayant atteint l'objet 5 dans la région où ce dit objet 5 était éclairé. La zone claire 30 résulte donc des rayons lumineux dont les angles d'incidence $\alpha$ étaient inférieurs à l'angle critique objet $\alpha_{objet}$. La zone claire 30 correspond donc spatialement à l'étendue de la surface 3 où les rayons lumineux ont pu traverser la surface 3 et atteindre l'objet 5 à authentifier, c'est-à-dire du disque centré sur la projection orthogonale de la source lumineuse 6 sur la surface 3 et dont le rayon dépend de $\alpha_{objet}$

L'image présente également une zone sombre 31 représentant la portion n'ayant pas reçu de lumière ou seulement un peu de lumière en raison de la diffusion par l'objet 5, à proximité de la zone claire 30. La zone sombre 31 résulte des rayons lumineux dont les angles d'incidence $\alpha$ étaient supérieurs à l'angle critique objet $\alpha_{objet}$ et qui, réfléchis en direction de l'écran d'absorption 9, n'ont pu atteindre l'imageur 4. La zone sombre 31 correspond donc spatialement à l'étendue de la surface 3 où les rayons lumineux n'ont pas pu traverser la surface 3 et atteindre l'objet 5 à authentifier.

Il existe donc sur l'image de l'objet 5 une frontière 32 à la transition entre la partie de l'objet 5 pour laquelle de la lumière issue de la source lumineuse 6 a été reçue et la partie de l'objet 5 pour laquelle de la lumière issue de la source lumineuse 6 n'a pas été reçue. Cette frontière peut présenter un flou plus ou moins important en fonction des propriétés de diffusion optique de l'objet 5. Néanmoins, une limite d'extinction peut être déduite de cette frontière 32 afin de déterminer si l'objet 5 présenté a un indice de réfraction correspondant à de la peau humaine authentique. A l'instar des points d'incidence de l'ensemble des premiers trajets lumineux 11 et des seconds trajets lumineux 12 avec la surface 3, la frontière 32 forme un arc de cercle sur la surface 3 centré sur la source lumineuse 6. Il peut donc être avantageux de considérer une distance représentative du rayon de cet arc de cercle correspondant à la limite de l'éclairement de l'objet 5 par la source lumineuse 6.

Ainsi, dans les exemples non limitatifs qui suivent, seules les distances relevées le long d'une même droite seront prises en compte à des fins de comparaison, ici à titre d'exemple non limitatif sur une droite courant au milieu de la surface 3 à partir de la source lumineuse 6, où les distances relevées atteignent leurs valeurs minimales.

Dans l'exemple de la figure 3, la frontière 32 atteint une distance $d_1$ par rapport au côté d'origine des rayons lumineux, c'est-à-dire au côté où se trouve la source lumineuse 6. Cette distance $d_1$ est supérieure à la distance $d'_{min}$ qui correspond à la distance $d_{min}$ où le premier trajet lumineux 11 rencontre la surface 3, formant avec la normale à la surface 3 l'angle d'incidence $\alpha_{min}$ correspondant à l'indice de réfraction attendu pour une peau humaine authentique minimal $n_{min}$. La distance $d_1$ est inférieure à la distance $d'_{max}$ qui correspond à la distance $d_{max}$ où le deuxième trajet lumineux 12 rencontre la surface 3, formant avec la normale à la surface 3 l'angle d'incidence $\alpha_{max}$ correspondant à l'indice de réfraction attendu pour une peau humaine authentique maximal $n_{max}$. La frontière 32 se trouve donc dans un espace entre $d'_{max}$ et $d'_{min}$ qui correspond à des rayons lumineux dans la plage angulaire de criticité. Cela signifie que l'objet 5 présente un indice de réfraction $n_{objet}$ compris entre $n_{min}$ et $n_{max}$, c'est-à-dire un indice de réfraction $n_{objet}$ pouvant correspondre à un indice de réfraction attendu pour une peau humaine authentique. L'objet 5 est donc probablement une peau humaine authentique.

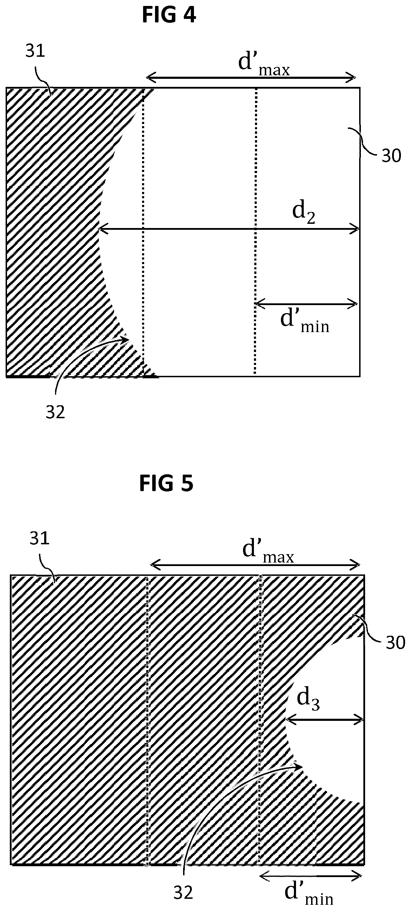

Dans l'exemple de la figure 4, la frontière 32 atteint une distance $d_2$ par rapport au côté d'origine des rayons lumineux, c'est-à-dire au côté où se trouve la source lumineuse 6. Cette distance $d_2$ est supérieure à la distance $d'_{max}$ qui correspond à la distance $d_{max}$ où le deuxième trajet lumineux 12 rencontre la surface 3, formant avec la normale à la surface 3 l'angle d'incidence $\alpha_{max}$ correspondant à l'indice de réfraction attendu pour une peau humaine authentique maximal $n_{max}$. La frontière 32 se trouve donc en-dehors de l'espace entre $d'_{max}$ et $d'_{min}$ correspondant à des rayons lumineux dans la plage angulaire de criticité. Cela signifie que l'objet 5 présente un indice de réfraction $n_{objet}$ supérieur à $n_{max}$, c'est-à-dire un indice de réfraction $n_{objet}$ ne pouvant correspondre à un indice de réfraction attendu pour une peau humaine authentique. L'objet 5 est donc une fraude.

Il est d'ailleurs possible de ne pas obtenir de zone sombre 31, et d'avoir une zone claire 30 couvrant toute l'image. Cela signifie que l'ensemble de l'imageur 4 a reçu des rayons diffusés 21 provenant de rayons lumineux 20 présentant un angle d'incidence $\alpha_1$ inférieur à l'angle critique $\alpha_{objet}$ rencontre la surface 3 au niveau de l'emplacement où se trouve l'objet 5, et que par conséquent les rayons lumineux incidents à la surface 3 au-delà même de $d_{max}$ présentaient un angle d'incidence $\alpha_1$ inférieur à l'angle critique $\alpha_{objet}$. Cela signifie donc que l'angle critique $\alpha_{objet}$ est très élevé, et en particulier au-delà de l'angle critique maximal $\alpha_{max}$. Comme l'angle critique $\alpha_{objet}$ dérive de l'indice de réfraction de l'objet 5, cela signifie que l'objet 5 présente un indice de réfraction $n_{objet}$ très élevé, bien au-delà de ce que pourrait présenter une peau humaine authentique. Par conséquent, l'absence de frontière lorsque la zone claire 30 couvre toute l'image indique que l'objet 5 est une fraude.

Dans l'exemple de la figure 5, la frontière 32 atteint une distance $d_3$ par rapport au côté d'origine des rayons lumineux, c'est-à-dire au côté où se trouve la source lumineuse 6. Cette distance $d_3$ est inférieure à $d'_{min}$ qui correspond à la distance $d_{min}$ où le premier trajet lumineux 11 rencontre la surface 3, formant avec la normale à la surface 3 l'angle d'incidence $\alpha_{min}$ correspondant à l'indice de réfraction attendu pour une peau humaine authentique minimal $n_{min}$. La frontière 32 se trouve donc en-dehors de l'espace entre $d'_{max}$ et $d'_{min}$ correspondant à des rayons lumineux dans la plage angulaire de criticité. Cela signifie que l'objet 5 présente un indice de réfraction $n_{objet}$ inférieur à $n_{min}$, c'est-à-dire un indice de réfraction $n_{objet}$ ne pouvant correspondre à un indice de réfraction attendu pour une peau humaine authentique. L'objet 5 est donc une fraude.

Il est d'ailleurs possible de ne pas obtenir de zone claire 30, et d'avoir une zone sombre 31 couvrant toute l'image. Cela signifie que l'imageur 4 n'a pas reçu des rayons diffusés 21 provenant de rayons lumineux 20 présentant un angle d'incidence $\alpha_1$ inférieur à l'angle critique objet $\alpha_{objet}$ rencontre la surface 3 au niveau de l'emplacement où se trouve l'objet 5, et que par conséquent les rayons lumineux incidents à la surface 3 avant même $d_{min}$ présentaient un angle d'incidence $\alpha_1$ supérieur à l'angle critique objet $\alpha_{objet}$. Cela signifie donc que l'angle critique objet $\alpha_{objet}$ est très bas, et en particulier au-delà de l'angle critique minimal $\alpha_{min}$. Comme l'angle critique objet $\alpha_{objet}$ dérive de l'indice de réfraction de l'objet 5, cela signifie que l'objet 5 présente un indice de réfraction $n_{objet}$ très bas, bien en deçà de ce que pourrait présenter une peau humaine authentique. Par conséquent, l'absence de frontière lorsque la zone sombre 31 couvre toute l'image indique que l'objet 5 est une fraude.

*Déroulement du procédé*

Préférentiellement, une première image peut être acquise, par exemple par l'imageur 4, avec un éclairage par une autre source de lumière du capteur 1 que la source lumineuse 6, typiquement une source de lumière utilisée pour acquérir les images servant à mettre en oeuvre une identification biométrique basée sur la comparaison d'empreintes digitales extraites des images acquises avec des empreintes digitales d'une base de données. Il est avantageux d'utiliser une source de lumière éclairant l'ensemble de la l'objet 5 présent sur la surface 3, notamment avec des rayons lumineux présentant un angle d'incidence faible à la surface 3, inférieur à l'angle critique de l'interface du milieu de propagation avec de l'air. Cette première image permet notamment d'obtenir une image de l'objet 5 placé sur la surface 3, et peut être exploitée pour normaliser le signal d'une seconde image obtenue avec un éclairage par la source lumineuse 6 afin de s'affranchir des variations locales du couplage optique de l'objet 5 avec la surface 3 ou de variations de réflectance de la peau humaine et/ou pour restreindre la zone exploitée de la seconde image aux endroits où l'objet 5 est en contact avec la surface 3.

Une seconde image est donc acquise par l'imageur 4 avec un éclairage de la surface 3 (et éventuellement de l'objet 5) par la source lumineuse 6 comme précédemment décrit. Il est possible d'identifier sur cette seconde image la position de l'objet 5 pour restreindre la zone exploitée de la seconde image aux endroits où l'objet 5 est en contact avec la surface 3, si une première image n'est pas utilisée. De préférence, il est possible d'acquérir une troisième image sans éclairage. Cette troisième image peut être soustraite de la seconde image afin de supprimer sur ladite seconde image les effets d'un éventuel éclairage ambiant, notamment par le soleil ou une forte lumière artificielle éclairant le capteur 1 et l'objet 5. La troisième image peut également être soustraite à la première image pour les mêmes raisons.

C'est la seconde image qui est de préférence exploitée pour déterminer la correspondance entre l'objet 5 et une peau humaine authentique sur la base de l'indice de réfraction dudit objet. Cette seconde image est par la suite simplement désignée par le terme "image". Il est bien entendu qu'il est possible de faire subir à l'image acquise ou aux images acquises différents prétraitements permettant d'améliorer l'exploitation de ces images. On peut par exemple normaliser les images acquises pour compenser une éventuelle non-uniformité de l'éclairage, avec une correction d'image préalablement déterminée (par exemple lors du calibrage du capteur).

La détermination de la correspondance entre l'objet 5 et une peau humaine authentique est faite en fonction de la distribution spatiale de la lumière sur l'image acquise par l'imageur 4. Pour ce faire, cette distribution spatiale est comparée à une distribution spatiale attendue pour une peau humaine authentique, au moyen d'un profil d'intensité lumineuse.

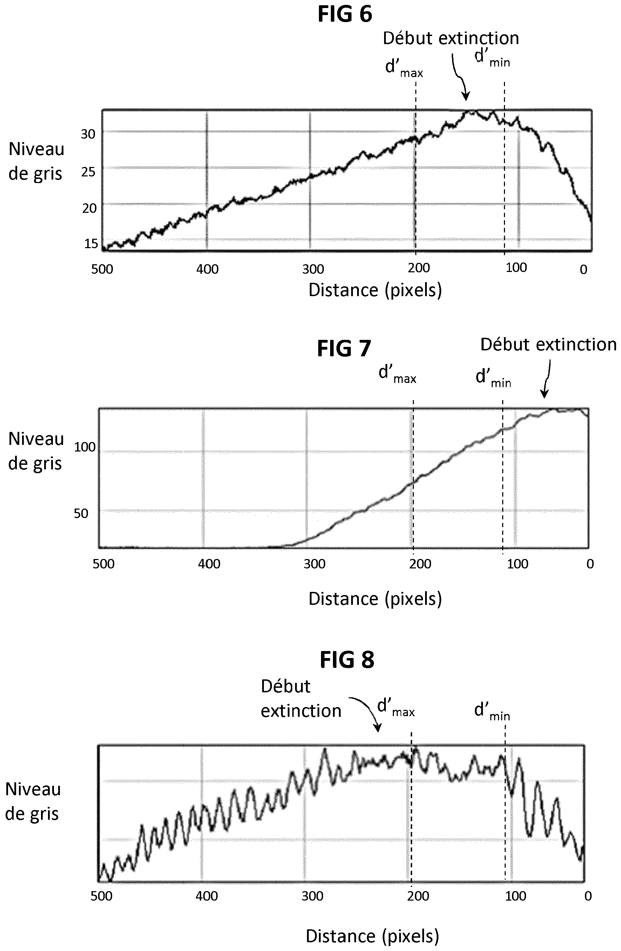

Pour comparer la distribution spatiale, un profil d'intensité lumineuse en fonction d'une distance à la source lumineuse 6, comme illustré sur les figures 6, 7 et 8, est déterminé à partir de l'image acquise. Le profil d'intensité lumineuse peut être déterminé à partir de plusieurs images acquises. Ce profil d'intensité lumineuse est représentatif de la distribution spatiale de la lumière sur l'image acquise. Une caractéristique dérivée du profil d'intensité est comparée à au moins une caractéristique de référence représentative d'un profil d'intensité lumineuse correspondant à une distribution spatiale attendue pour une peau humaine authentique. Puisque la distribution spatiale de la lumière dépend au moins de l'indice de réfraction de l'objet 5, le profil d'intensité lumineuse qui en est dérivé dépend également de l'indice de réfraction de l'objet 5. De préférence, la caractéristique dérivée du profil d'intensité est choisie pour également dépendre de l'indice de réfraction de l'objet 5, et donc varier en fonction de l'indice de réfraction de l'objet 5. Il en va de même pour la caractéristique de référence, qui dépend d'un indice de réfraction attendu pour une peau humaine authentique. En particulier, la caractéristique de référence peut correspondre à un trajet lumineux comprenant un angle critique défini par l'indice de réfraction $n_{milieu}$ du milieu de propagation et par un indice de réfraction attendu pour une peau humaine authentique.

Le profil d'intensité lumineuse est déterminé à partir de l'image acquise. Le profil d'intensité lumineuse prend donc en compte qu'une distance apparaissant dans cette image acquise. Le profil d'intensité lumineuse doit seulement être fonction d'une distance à la source lumineuse, sans nécessité de déterminer précisément cette distance. Il suffit qu'elle se traduise dans le profil d'intensité, c'est-à-dire que le profil rende compte de l'évolution de l'intensité lumineuse en fonction d'une distance à la source. Il suffit simplement que le profil d'intensité conserve la répartition de l'intensité lumineuse en fonction d'une distance à la source lumineuse, peu importe d'éventuelles déformations d'échelle ou autre. A titre d'exemple simplifié, il suffit que les éléments les plus éloignés de la source lumineuse apparaissant dans l'image acquise soient pris en compte à une extrémité du profil, tandis que les éléments les plus proches de la source lumineuse apparaissant dans l'image acquise soient pris en compte à l'autre extrémité du profil. Par ailleurs, l'image acquise étant typiquement en deux dimensions, les différentes distances sont projetées sur l'image acquise, de sorte qu'il importe peu de savoir quelle distance est retenue.

De ce fait, de nombreuses méthodes sont possibles pour dériver un profil d'intensité lumineuse en fonction de la distance à la source lumineuse 6. On peut notamment déterminer les intensités le long d'une même droite, par exemple courant au milieu de l'image à partir de la projection la source lumineuse 6, où les distances relevées atteignent leurs valeurs minimales, en extrayant les niveaux de gris de pixels de l'image situés sur cette droite. C'est ce qui a été fait sur les figures 6 à 8. Il est possible de prendre un rectangle de largeur faible devant les rayons attendus à la place de la droite, ledit rectangle s'étendant en longueur depuis la projection la source lumineuse 6 et courant sur sa longueur au milieu de l'image, et d'en consolider les valeurs d'intensité, par exemple en faisant les moyennes des niveaux de gris de même abscisse. On peut également calculer pour un ensemble de pixels équidistants de la source lumineuse 6 (et donc formant les arcs de cercle déjà évoqués) la moyenne des niveaux de gris desdits pixels, ou une autre valeur similaire, éventuellement en utilisant un seuillage pour ne garder que les pixels les plus clairs (correspondant aux points où l'objet 5 à authentifier est en contact avec la lame). On utilise alors les projections sur un axe des valeurs moyennes consolidées le long d'une pluralité d'arcs de cercle de rayons correspondant aux abscisses de cet axe. Le regroupement des pixels équidistants de la source lumineuse 6 permet une détermination plus robuste des conséquences de la limite d'extinction, ou de la pente de l'extinction, mais peut effacer certaines autres caractéristiques, notamment de variabilité. De fait, des caractéristiques optiques de l'objet 5 autres que l'indice de réfraction, peuvent être exploitées pour détecter une fraude, en complément de l'indice de réfraction. Ainsi, la variabilité du profil d'intensité lumineuse peut donner des indications sur les coefficients d'absorption $\mu_a$ et de diffusion réduit $\mu_s'$ de l'objet 5 à authentifier, et de donc être également utilisée pour détecter les fraudes.

Préalablement, ou à la place de calculer la moyenne, il est possible d'utiliser une éventuelle première image pour déterminer un masque de présence en appliquant un filtrage par seuil (par exemple par la méthode d'Otsu) sur les niveaux de gris des pixels de ladite première image, et de ne garder que les pixels de l'image correspondant au masque de présence. Il est également possible de calculer le produit scalaire entre les pixels de la première image et les pixels de l'image.

Une fois le profil d'intensité acquis, on peut déterminer au moins une caractéristique dérivée du profil d'intensité lumineuse. Cette caractéristique peut être de différents types. La caractéristique dérivée dépend bien évidemment du choix de la caractéristique de référence à laquelle elle doit correspondre. Ainsi, lorsque la caractéristique dérivée est une distance par rapport à la projection de la source lumineuse 6 sur la surface 3 (ou d'un autre point de référence similaire), via sa représentation dans l'image acquise, la caractéristique de référence peut notamment être une position de référence correspondant à $d'_{max}$ ou $d'_{min}$. Il peut y avoir plusieurs positions de référence, notamment $d'_{max}$ et $d'_{min}$ ou des positions intermédiaires.

En particulier, la correspondance entre l'objet 5 et une peau humaine authentique peut comprendre la détermination d'une position de décroissance représentative d'une limite d'extinction correspondant à une transition (éventuellement floue) entre la portion de l'image pour laquelle de la lumière issue de la source lumineuse 6 a été reçue et la portion de l'image pour laquelle de la lumière issue de la source lumineuse 6 n'a pas été reçue, où plus précisément la quantité de lumière commence à décroître en raison de la réflexion à l'interface surface 3 - objet 5. La position de décroissance peut par exemple être la distance à la projection de la source lumineuse 6 sur l'image à laquelle apparaît une limite d'extinction, ou une autre caractéristique liée à ce phénomène. L'authenticité de l'objet 5 est alors déterminée en comparant la position de décroissance (ou une caractéristique similaire) avec la position de référence.

Plus précisément, la position de décroissance est comparée à une plage d'extinction délimitée par une première position de référence correspondant à un indice de réfraction maximal $n_{max}$ attendu pour une peau humaine authentique, c'est-à-dire $d'_{max}$, et une deuxième position de référence correspondant à un indice de réfraction minimal $n_{min}$ attendu pour une peau humaine authentique, c'est-à-dire $d'_{min}$, et

- l'objet 5 est déterminé comme étant recouvert de peau humaine authentique si la position de décroissance se trouve dans la plage d'extinction,
- l'objet 5 est déterminé comme n'étant recouvert de peau humaine authentique si la position de décroissance se trouve hors de la plage d'extinction.

Les figures 6, 7, et 8 montrent des exemples de profils d'intensité lumineuse en fonction de la distance à la source lumineuse 6 sur des images acquises avec différents objets 5. Ces images ont été acquises avec une source lumineuse 6 émettant une lumière verte avec un angle d'émission inférieur à 50°, disposée à droite sur les figures, avec une direction d'éclairage parallèle à la surface 3. L'éclairage reçu au niveau de l'objet 5 à authentifier n'est donc pas uniforme et présente un maximum spatialement proche de $d_{max}$, et de préférence plus éloigné de la source lumineuse 6 que $d_{max}$. Par conséquent, l'intensité maximale potentielle (i.e. le niveau de gris maximal potentiel) sur les figures 6, 7, et 8 est située peu après $d_{max}$. Toutefois, sur les profils d'intensité illustrés, l'intensité maximal atteinte et sa position dépendent de nombreux facteurs. En premier lieu, l'extinction en raison des angles d'incidence et donc des indices de réfraction est essentielle pour la position du maximum d'intensité, puisque le maximum d'intensité ne peut être atteint qu'avant la limite d'extinction. Ensuite, les autres propriétés optiques de la peau humaine telles que les coefficients d'absorption $\mu_a$ et de diffusion $\mu_s'$ influent sur la valeur maximale de l'intensité. L'intensité maximale, représentative de l'albédo, peut d'ailleurs être également utilisée pour détecter les fraudes. En tout état de cause, il est possible de détecter une incohérence entre la position d'extinction déterminée à partir du profil d'intensité lumineuse, et une position de référence, dans la mesure où cette position de référence prend en compte les divers paramètres d'acquisition.

La figure 6 montre un exemple de profil d'intensité lumineuse en fonction de la distance à la source lumineuse 6 sur une image acquise avec un doigt humain (recouvert de peau humaine authentique) positionné à l'emplacement prévu de la surface 3. Plus précisément, les niveaux de gris des pixels sur une ligne y sont représentés en fonction de la distance en pixels. En parcourant le profil de droite à gauche, on constate que l'intensité lumineuse croît d'abord, avant et après $d'_{min}$ (environ 120 pixels). L'intensité lumineuse présente alors des valeurs maximales. On constante ensuite qu'à partir d'une distance d'environ 160 pixels, l'intensité lumineuse décroît régulièrement. Il s'agit du phénomène d'extinction, lié à l'indice de réfraction de l'objet. Cela signifie qu'à partir de ce début d'extinction, les angles d'incidence des rayons lumineux, qui augmentent avec la distance à la source lumineuse 6, dépassent l'angle critique objet $\alpha_{objet}$. Or, ce début d'extinction intervient à une distance comprise entre $d'_{min}$ et $d'_{max}$, indiquant donc que l'angle critique objet $\alpha_{objet}$ est compris dans la plage angulaire de criticité entre $\alpha_{min}$ et $\alpha_{max}$. L'indice de réfraction de l'objet 5 correspond à un indice attendu pour une peau humaine. Dans cet exemple, la position de décroissance peut alors être 160 (distance en pixel), tandis que la première position de référence peut être 200 (distance en pixel) et la deuxième position de référence peut être 120 (distance en pixel). La position de décroissance se trouve donc dans la plage d'extinction. On peut donc déterminer, sur la base de l'indice de réfraction de l'objet 5, qu'il est constitué de peau humaine, et donc l'authentifier.

Il est à noter que d'autres caractéristiques dérivées de la distribution spatiale peuvent être utilisées pour authentifier l'objet 5, en particulier en complément de caractéristiques liées à l'indice de réfraction. Par exemple, on peut déterminer la pente de la décroissance de l'intensité lumineuse qui suit le début de l'extinction, ladite pente de décroissance étant représentative notamment de la diffusion optique dans l'objet 5.

La figure 7 montre un exemple de profil d'intensité lumineuse en fonction de la distance à la source lumineuse 6 sur une image acquise avec une fraude constituée par un papier mouillé sur lequel est imprimé une image d'empreinte digitale, positionnée à l'emplacement prévu de la surface 3. Par rapport au profil illustré par la figure 6, on constate que le profil présente un début d'extinction se situant avant 120 pixels, et donc avant $d'_{min}$, indiquant que l'angle critique objet $\alpha_{objet}$ est inférieur à $\alpha_{min}$ donc que l'indice de réfraction de l'objet 5 est en-deçà de l'indice de réfraction attendu pour une peau humaine authentique minimal $n_{min}$. Dans cet exemple, la position de décroissance peut alors être 80 (distance en pixel), tandis que la deuxième position de référence peut être de 120 (distance en pixel). La position de décroissance ne se trouve donc pas dans la plage d'extinction. Il s'agit donc probablement d'une fraude.

On constate par ailleurs également que l'intensité maximale dépasse la valeur 100, tandis que l'intensité maximale dans la figure 6 ne dépassait pas 30. L'intensité maximale est représentative de l'albédo de l'objet présenté, et découle notamment des propriétés optiques de l'objet 5 présenté telles que l'absorption (outre la différence entre la position du maximum par rapport à la position du maximum potentiel déjà évoquée). L'intensité maximale peut donc également être utilisée en complément pour détecter les fraudes, lorsque sa valeur diffère trop de celle d'une peau humain authentique.

Ainsi que déjà évoqué, la pente de décroissance du profil (après le début de l'extinction) est sensiblement plus importante sur le profil de la figure 7 que sur le profil de la figure 6, ce qui montre qu'on peut également utiliser cette pente en tant que caractéristique dérivée de la répartition spatiale de la lumière sur le profil. Plus généralement, l'analyse de la partie du profil suivant le début de l'extinction permet de déterminer si l'absorption de la lumière par l'objet correspond à l'absorption d'une peau humaine authentique.

La figure 8 montre un exemple de profil d'intensité lumineuse en fonction de la distance à la source lumineuse 6 sur une image acquise avec une fraude constituée par de la colle présentant un relief d'empreintes digitales, positionnée à l'emplacement prévu de la surface 3. Par rapport au profil illustré par la figure 6, on constate que le profil présente un début d'extinction se situant à une distance d'environ 220 pixels, et donc après $d'_{max}$. Dans cet exemple, la position de décroissance peut alors être 220 (distance en pixel), tandis que la première position de référence peut être de 200 (distance en pixel). La position de décroissance ne se trouve donc pas dans la plage d'extinction. Il s'agit donc d'une fraude puisque l'indice de réfraction de l'objet présenté est supérieur aux indices de réfraction attendus pour une peau humaine authentique. On constate par ailleurs que le profil est beaucoup plus irrégulier que celui illustré par la figure 6, ce qui peut amener à détecter une fraude. En effet, cette irrégularité est représentative des propriétés géométriques et optiques de la colle (notamment de sa forte diffusion), qui diffèrent sensiblement de la peau humaine.

Dans les exemples ci-dessus, il a été supposé pour des raisons de simplicité que le début de l'extinction était aisément identifiable, ce qui n'est pas toujours le cas. On peut donc adopter d'autres caractéristiques liées à cette extinction en raison des indices de réfraction, comme par exemple un maximum de gradient, ou l'atteinte d'un pourcentage donné (typiquement 50%) de l'intensité maximale. Bien évidemment, les caractéristiques de référence sont alors choisies différentes de $d'_{min}$ et $d'_{max}$ pour refléter ces choix. Toutefois, les caractéristiques de référence correspondent toujours à un trajet lumineux comprenant un angle critique défini par l'indice de réfraction $n_{milieu}$ du milieu de propagation 2 et par un indice de réfraction attendu pour une peau humaine authentique.

En outre, les variabilités des caractéristiques de la peau humaine rendent préférable de prendre en compte l'écart apparaissant entre une caractéristique dérivée de la distribution spatiale et au moins une caractéristique de référence, plutôt qu'un résultat binaire "authentique" ou "fraude". On détermine donc de préférence une probabilité que l'objet 5 soit une fraude suivant une loi en fonction de l'écart à la caractéristique de référence la plus proche, comme par exemple une distance entre la limite d'extinction par rapport à $d'_{min}$ ou à $d'_{max}$.

Ainsi qu'évoqué, on peut donc utiliser différentes caractéristiques dérivées du profil d'intensité lumineuse outre la position de la limite d'extinction, comme la position ou la valeur du maximum, la pente de décroissance au-delà de cette limite d'extinction. On peut même combiner entre elles plusieurs caractéristiques, et les comparer à des combinaisons de caractéristiques représentatives de peau humaines authentiques ou de fraudes. On peut par exemple utiliser une technique de seuillage ou une technique d'apprentissage, tel que des machines à vecteurs de support, plus connu sous l'acronyme anglais de SVM pour "support vector machine".

On peut également comparer directement la distribution spatiale de la lumière à un gabarit représentatif de la réponse lumineuse d'une peau humaine authentique. La caractéristique dérivée est une alors une forme du profil d'intensité lumineuse, et la détermination de la correspondance entre l'objet et une peau humaine authentique comprend la comparaison de la forme du profil d'intensité lumineuse avec une pluralité de profils de référence correspondant à des caractéristiques optiques connues, lesdites caractéristiques optiques connues comprenant au moins des indices de réfraction différents. Les profils de référence peuvent en outre correspondre à différents coefficients d'absorption et de diffusion.

Par exemple, on peut calculer une mesure de similarité (ou inversement de dissimilarité) telle qu'une distance mathématique entre le profil étudié, tiré de l'image acquise et un ou plusieurs profils de référence. Diverses caractéristiques liées à la forme du profil peuvent être analysées pour faire cette comparaison, telles que la position d'un points d'inflexion, des distances, des pentes avant ou après un point d'inflexion, etc.. Si le profil étudié est plus proche d'un profil de référence correspondant à une peau humaine authentique, alors l'objet présenté est recouvert de peau humaine authentique. A l'inverse, si le profil étudié est plus proche d'un profil de référence correspondant à une fraude particulière, alors l'objet présenté est probablement cette fraude particulière.

Alternativement, on peut déduire différentes valeurs représentatives de caractéristiques optiques de l'objet 5, en plus de l'indice de réfraction, comme les coefficients d'absorption $\mu_a$ et de diffusion réduit $\mu_s$' de l'objet 5 à authentifier, en comparant le profil à une base de profils correspondant à des milieux homogènes de propriété optiques connues. Enfin, on peut simplement présenter le profil à un CNN (réseau neuronal convolutif) entrainé à séparer des profils provenant de peaux humaines authentiques et des profils provenant de fraudes.

Le procédé est utilisé pour détecter la fraude pour authentifier qu'un objet est recouvert de peau humaine authentique. Il peut avantageusement faire partie d'un procédé d'identification biométrique comprenant la comparaison d'empreintes digitales extraites d'une image acquise avec celles d'une base de données, en particulier basée sur points singuliers locaux (appelés aussi minuties).

L'invention concerne également un produit programme d'ordinateur comprenant des instructions de code de programme pour l'exécution des étapes du procédé selon l'un quelconque des modes de réalisation précédemment décrit lorsque ledit programme est exécuté par un ordinateur.

L'invention n'est pas limitée au mode de réalisation décrit et représenté aux figures annexées.

## Revendications

1. Procédé de détection de fraude pour authentifier qu'un objet est recouvert de peau humaine au moyen d'un système biométrique d'analyse d'un objet à authentifier comme recouvert de peau humaine, ledit système comprenant un capteur (1) d'empreintes papillaires, ledit capteur comprenant :

   - un milieu de propagation (2) comprenant une surface (3) avec un emplacement d'accueil destiné à recevoir l'objet à authentifier,
   - une source lumineuse (6) configurée pour éclairer l'emplacement d'accueil de la surface à travers le milieu de propagation par des rayons lumineux incidents se propageant dans le milieu de propagation (2),
   - un imageur (4) adapté pour recevoir des rayons lumineux se propageant dans le milieu de propagation en provenance de la surface (3),

   ledit objet (5) présentant un indice de réfraction et étant placé à un emplacement d'accueil à la surface (3) du milieu de propagation (2) du capteur (1), ledit milieu de propagation (2) présentant un indice de réfraction $n_{milieu}$, le procédé comprenant les étapes suivantes :

   - éclairage de l'emplacement d'accueil de la surface (3) à travers le milieu de propagation (2) par des rayons lumineux incident (20, 22) se propageant dans le milieu de propagation (2) à partir de la source lumineuse (6), lesdits rayons lumineux incidents (20, 22) éclairant l'emplacement d'accueil formant avec ladite surface une pluralité d'angles d'incidence ($\alpha_1$, $\alpha_2$) englobant au moins un angle critique défini par l'indice de réfraction $n_{milieu}$ du milieu de propagation (2) et par un indice de réfraction attendu pour une peau humaine authentique,
   - réception par l'imageur (4) de rayons lumineux se propageant dans le milieu de propagation (2) en provenance de la surface (3), lesdits rayons lumineux provenant de rayons lumineux incidents formant avec la surface (3) des angles d'incidences ($\alpha_1$) inférieurs ou égaux à un angle critique défini par l'indice de réfraction $n_{milieu}$ du milieu de propagation (2) et par l'indice de réfraction de l'objet (5) à authentifier, et acquisition d'une image par l'imageur (4), ladite image présentant une distribution spatiale de la lumière dépendant au moins de l'indice de réfraction de l'objet (5),

- à partir de l'image acquise, détermination d'un profil d'intensité lumineuse en fonction d'une distance à la source lumineuse (6), le profil d'intensité lumineuse étant représentatif de la distribution spatiale de la lumière sur l'image acquise en fonction d'une distance à la source lumineuse, ledit profil d'intensité lumineuse dépendant de l'indice de réfraction de l'objet (5),
- détermination d'au moins une caractéristique dérivée du profil d'intensité lumineuse et dépendant de l'indice de réfraction de l'objet (5),
- détermination de la correspondance entre l'objet (5) et une peau humaine authentique en comparant la caractéristique dérivée du profil d'intensité lumineuse à une caractéristique de référence représentative d'un profil d'intensité lumineuse correspondant à une distribution spatiale attendue pour une peau humaine authentique, ladite caractéristique de référence dépendant d'un indice de réfraction attendu pour une peau humaine authentique, et
- authentification ou non que l'objet est recouvert de peau humaine en fonction de la correspondance déterminée.

2. Procédé selon la revendication précédente, dans lequel la caractéristique de référence correspond à un trajet lumineux comprenant un angle critique défini par l'indice de réfraction $n_{milieu}$ du milieu de propagation (2) et par un indice de réfraction attendu pour une peau humaine authentique.

3. Procédé selon l'une des revendications précédentes, dans lequel la caractéristique dérivée du profil d'intensité lumineuse est représentative d'une décroissance de l'intensité lumineuse dans le profil d'intensité lumineuse.

4. Procédé selon la revendication précédente, dans lequel la caractéristique dérivée du profil d'intensité lumineuse est une position de décroissance de l'intensité lumineuse dans le profil d'intensité lumineuse, et la caractéristique de référence est une position de référence.

5. Procédé selon la revendication précédente, dans lequel la position de décroissance est comparée à une plage d'extinction délimitée par une première position de référence correspondant à un indice de réfraction maximal attendu pour une peau humaine authentique et une deuxième position de référence correspondant à un indice de réfraction minimal attendu pour une peau humaine authentique, et

- l'objet est déterminé comme étant recouvert de peau humaine authentique si la position de décroissance se trouve dans la plage d'extinction,
- l'objet est déterminé comme n'étant pas un doigt humain authentique si la position de décroissance se trouve hors de la plage d'extinction.

6. Procédé selon l'une quelconque des revendications précédentes, dans lequel l'indice de réfraction attendu pour de la peau humaine authentique est inférieur ou égal à un indice de réfraction attendu maximal $n_{max}$ et la pluralité d'angles d'incidence formés par les rayons lumineux comprend des angles d'incidence $\alpha$ supérieurs à

$$\sin^{-1}\left(\frac{n_{max}}{n_{milieu}}\right)$$

avec $n_{max}$ inférieur ou égal à 1,48 et supérieur ou égal à 1,42.

7. Procédé selon l'une quelconque des revendications précédentes, dans lequel l'indice de réfraction attendu pour de la peau humaine authentique est supérieur ou égal à un indice de réfraction attendu minimal $n_{min}$ et la pluralité d'angles d'incidence formés par les rayons lumineux comprend des angles d'incidence $\alpha$ inférieurs à

$$\sin^{-1}\left(\frac{n_{min}}{n_{milieu}}\right)$$

avec $n_{min}$ supérieur ou égal à 1,38 et inférieur ou égal à 1,44.

8. Procédé selon l'une quelconque des revendications précédentes, dans lequel la caractéristique dérivée est une forme du profil d'intensité lumineuse, et la détermination de la correspondance entre l'objet (5) et une peau humaine authentique comprend la comparaison de la forme du profil d'intensité lumineuse avec une pluralité de profils de référence correspondant à des caractéristiques optiques connues, lesdites caractéristiques optiques connues comprenant au moins des indices de réfraction.

9. Procédé selon l'une des revendications 1 à 8, dans lequel les rayons lumineux incidents (20, 22) éclairant l'emplacement d'accueil de la surface (3) sont dans des longueurs d'onde inférieures à 600 nm.

10. Procédé selon la revendication précédente, dans lequel des rayons lumineux incidents (20, 22) éclairant l'emplacement d'accueil de la surface (3) sont dans des longueurs d'onde inférieures à 600 nm, et d'autres rayons lumineux incidents (20, 22) éclairant l'emplacement d'accueil de la surface (3) sont dans des longueurs d'onde supérieures à 600 nm.

11. Système biométrique d'analyse d'un objet à authentifier comme recouvert de peau humaine, comprenant un capteur (1) d'empreintes papillaires, ledit capteur comprenant :

    - un milieu de propagation (2) comprenant une surface (3) avec un emplacement d'accueil destiné à recevoir l'objet à authentifier,
    - une source lumineuse (6) configurée pour éclairer l'emplacement d'accueil de la surface à travers le milieu de propagation par des rayons lumineux incidents se propageant dans le milieu de propagation (2), lesdits rayons lumineux incidents (20, 22) destinés à éclairer l'emplacement d'accueil formant avec ladite surface (3) une pluralité d'angles d'incidence ($\alpha_1$, $\alpha_2$) englobant au moins un angle critique défini par l'indice de réfraction $n_{milieu}$ du milieu de propagation et par un indice de réfraction attendu pour un doigt humain authentique,
    - un imageur (4) adapté pour recevoir des rayons lumineux se propageant dans le milieu de propagation en provenance de la surface (3), lesdits rayons lumineux provenant de rayons lumineux incidents formant avec la surface (3) des angles d'incidences ($\alpha_1$) inférieurs ou égaux à un angle critique défini par l'indice de réfraction $n_{milieu}$ du milieu de propagation (2) et par l'indice de réfraction de l'objet (5) à authentifier, et pour acquérir une image, le système étant configuré pour mettre en oeuvre le procédé de détection de fraude selon l'une des revendications 1 à 10.

12. Produit programme d'ordinateur comprenant des instructions de code de programme qui conduisent le système biométrique d'analyse d'un objet à authentifier comme recouvert de peau humaine selon la revendication 11 à exécuter les étapes du procédé selon l'une des revendications 1 à 10.

**Patentansprüche**

1. Verfahren zur Erkennung von Betrug zwecks Authentifizierung, dass ein Gegenstand mit menschlicher Haut überzogen ist, mittels eines biometrischen Systems zur Analyse eines als mit menschlicher Haut überzogen zu authentifizierenden Gegenstands, wobei das System einen Fingerabdrucksensor (1) umfasst, wobei der Sensor umfasst:

    - ein Ausbreitungsmedium (2), umfassend eine Oberfläche (3) mit einer Aufnahmestelle, die dazu bestimmt ist, den zu authentifizierenden Gegenstand zu empfangen,
    - eine Lichtquelle (6), die dazu ausgestaltet ist, die Aufnahmestelle der Oberfläche durch das Ausbreitungsmedium hindurch mit einfallenden Lichtstrahlen zu beleuchten, die sich in dem Ausbreitungsmedium (2) ausbreiten,
    - einen Bildgeber (4), der geeignet ist, Lichtstrahlen zu empfangen, die sich von der Oberfläche (3) aus in dem Ausbreitungsmedium ausbreiten,

wobei der Gegenstand (5) einen Brechungsindex aufweist und an einer Aufnahmestelle an der Oberfläche (3) des Ausbreitungsmediums (2) des Sensors (1) angeordnet ist, wobei das Ausbreitungsmedium (2) einen Brechungsindex $n_{Medium}$ aufweist, wobei das Verfahren die folgenden Schritte umfasst:

    - Beleuchten der Aufnahmestelle der Oberfläche (3) durch das Ausbreitungsmedium (2) hindurch mit einfallenden Lichtstrahlen (20, 22), die sich ausgehend von der Lichtquelle (6) in dem Ausbreitungsmedium (2) ausbreiten, wobei die die Aufnahmestelle beleuchtenden einfallenden Lichtstrahlen (20, 22) mit der Oberfläche eine Mehrzahl von Einfallswinkeln ($\alpha_1$, $\alpha_2$) bilden, die mindestens einen kritischen Winkel beinhalten, der durch den Brechungsindex $n_{Medium}$ des Ausbreitungsmediums (2) und durch einen für eine echte menschliche Haut erwarteten Brechungsindex definiert ist,
    - Empfangen, durch den Bildgeber (4), von Lichtstrahlen, die sich von der Oberfläche (3) aus in dem Ausbreitungsmedium (2) ausbreiten, wobei die von einfallenden Lichtstrahlen stammenden Lichtstrahlen mit der Oberfläche (3) Einfallswinkel ($\alpha_1$) bilden, die kleiner als oder gleich einem kritischen Winkel sind, der durch den Brechungsindex $n_{Medium}$ des Ausbreitungsmediums (2) und durch den Brechungsindex des zu authentifizierenden Gegenstands (5) definiert ist, und Erfassen eines Bildes durch den Bildgeber (4), wobei das Bild eine räumliche Verteilung des Lichts aufweist, die mindestens von dem Brechungsindex des Gegenstands (5) abhängt,
    - ausgehend von dem erfassten Bild, Bestimmen eines Lichtintensitätsprofils in Abhängigkeit von einem Abstand zu der Lichtquelle (6), wobei das Lichtintensitätsprofil für die räumliche Verteilung des Lichts auf dem erfassten Bild in Abhängigkeit von einem Abstand zu der Lichtquelle repräsentativ ist, wobei das Lichtintensitätsprofil von dem Brechungsindex des Gegenstands (5) abhängt,
    - Bestimmen mindestens eines aus dem Lichtintensitätsprofil abgeleiteten und von dem Brechungsindex des Gegenstands (5) abhängigen Merkmals,
    - Bestimmen der Übereinstimmung zwischen dem Gegenstand (5) und einer echten menschlichen Haut, indem das aus dem Lichtintensitätsprofil abgeleitete Merkmal mit einem Referenzmerkmal verglichen wird, das für ein Lichtintensitätsprofil repräsentativ ist, das einer für eine echte menschliche Haut erwarteten räumlichen Verteilung entspricht, wobei das Referenzmerkmal von einem für eine echte menschliche Haut erwarteten Brechungsindex abhängt, und
- Authentifizieren oder nicht, dass der Gegenstand mit menschlicher Haut überzogen ist, in Abhängigkeit von der bestimmten Übereinstimmung.

2. Verfahren nach dem vorhergehenden Anspruch, bei dem das Referenzmerkmal einem Lichtweg entspricht, der einen kritischen Winkel umfasst, der durch den Brechungsindex $n_{Medium}$ des Ausbreitungsmediums (2) und durch einen für eine echte menschliche Haut erwarteten Brechungsindex definiert ist.

3. Verfahren nach einem der vorhergehenden Ansprüche, bei dem das aus dem Lichtintensitätsprofil abgeleitete Merkmal für eine Abnahme der Lichtintensität in dem Lichtintensitätsprofil repräsentativ ist.

4. Verfahren nach dem vorhergehenden Anspruch, bei dem das aus dem Lichtintensitätsprofil abgeleitete Merkmal eine Abnahmeposition der Lichtintensität in dem Lichtintensitätsprofil ist und das Referenzmerkmal eine Referenzposition ist.

5. Verfahren nach dem vorhergehenden Anspruch, bei dem die Abnahmeposition mit einem Extinktionsbereich verglichen wird, der durch eine erste Referenzposition, die einem für eine echte menschliche Haut erwarteten maximalen Brechungsindex entspricht, und eine zweite Referenzposition, die einem für eine echte menschliche Haut erwarteten minimalen Brechungsindex entspricht, begrenzt wird, und

   - der Gegenstand als mit echter menschlicher Haut überzogen bestimmt wird, wenn sich die Abnahmeposition in dem Extinktionsbereich befindet,
   - der Gegenstand als nicht mit echter menschlicher Haut überzogen bestimmt wird, wenn sich die Abnahmeposition außerhalb des Extinktionsbereichs befindet.

6. Verfahren nach einem der vorhergehenden Ansprüche, bei dem der für echte menschliche Haut erwartete Brechungsindex kleiner als oder gleich einem erwarteten maximalen Brechungsindex $n_{max}$ ist und die Mehrzahl von Einfallswinkeln, die durch die Lichtstrahlen gebildet werden, Einfallswinkel $\alpha$ umfasst, die größer sind als

$$sin^{-1}\left(\frac{n_{max}}{n_{Medium}}\right)$$

mit $n_{max}$ kleiner als oder gleich 1,48 und größer als oder gleich 1,42.

7. Verfahren nach einem der vorhergehenden Ansprüche, bei dem der für echte menschliche Haut erwartete Brechungsindex größer als oder gleich einem erwarteten minimalen Brechungsindex $n_{min}$ ist und die Mehrzahl von Einfallswinkeln, die durch die Lichtstrahlen gebildet werden, Einfallswinkel $\alpha$ umfasst, die kleiner sind als

$$sin^{-1}\left(\frac{n_{min}}{n_{Medium}}\right)$$

mit $n_{min}$ größer als oder gleich 1,38 und kleiner als oder gleich 1,44.

8. Verfahren nach einem der vorhergehenden Ansprüche, bei dem das abgeleitete Merkmal eine Form des Lichtintensitätsprofils ist und das Bestimmen der Übereinstimmung zwischen dem Gegenstand (5) und einer echten menschlichen Haut das Vergleichen der Form des Lichtintensitätsprofils mit einer Mehrzahl von Referenzprofilen umfasst, die bekannten optischen Merkmalen entsprechen, wobei die bekannten optischen Merkmale mindestens Brechungsindizes umfassen.

9. Verfahren nach einem der Ansprüche 1 bis 8, bei dem die einfallenden Lichtstrahlen (20, 22), welche die Aufnahmestelle der Oberfläche (3) beleuchten, im Wellenlängenbereich unter 600 nm liegen.

10. Verfahren nach dem vorhergehenden Anspruch, bei dem einfallende Lichtstrahlen (20, 22), welche die Aufnahmestelle der Oberfläche (3) beleuchten, im Wellenlängenbereich unter 600 nm liegen, und andere einfallende Lichtstellen (20, 22), welche die Aufnahmestelle der Oberfläche (3) beleuchten, im Wellenlängenbereich über 600 nm liegen.

11. Biometrisches System zur Analyse eines als mit menschlicher Haut überzogen zu authentifizierenden Gegenstands, umfassend einen Fingerabdrucksensor (1), wobei der Sensor umfasst:

   - ein Ausbreitungsmedium (2), umfassend eine Oberfläche (3) mit einer Aufnahmestelle, die dazu bestimmt ist, den zu authentifizierenden Gegenstand zu empfangen,
   - eine Lichtquelle (6), die dazu ausgestaltet ist, die Aufnahmestelle der Oberfläche durch das Ausbreitungsmedium hindurch mit einfallenden Lichtstrahlen zu beleuchten, die sich in dem Ausbreitungsmedium (2) ausbreiten, wobei die einfallenden Lichtstrahlen (20, 22), die dazu bestimmt sind, die Aufnahmestelle zu beleuchten, mit der Oberfläche (3) eine Mehrzahl von Einfallswinkeln ($\alpha_1$, $\alpha_2$) bilden, die mindestens einen kritischen Winkel beinhalten, der durch den Brechungsindex $n_{Medium}$ des Ausbreitungsmediums und durch einen für einen echten menschlichen Finger erwarteten Brechungsindex definiert ist,

- einen Bildgeber (4), der geeignet ist, Lichtstrahlen zu empfangen, die sich von der Oberfläche (3) aus in dem Ausbreitungsmedium ausbreiten, wobei die von einfallenden Lichtstrahlen stammenden Lichtstrahlen mit der Oberfläche (3) Einfallswinkel ($\alpha_1$) bilden, die kleiner als oder gleich einem kritischen Winkel sind, der durch den Brechungsindex $n_{Medium}$ des Ausbreitungsmediums (2) und durch den Brechungsindex des zu authentifizierenden Gegenstands (5) definiert ist, und ein Bild zu erfassen, wobei das System dazu ausgestaltet ist, das Verfahren zur Erkennung von Betrug nach einem der Ansprüche 1 bis 10 durchzuführen.

12. Computerprogrammprodukt, umfassend Programmcodeanweisungen, die das biometrische System zur Analyse eines als mit menschlicher Haut überzogen zu authentifizierenden Gegenstands nach Anspruch 11 dazu bringen, die Schritte des Verfahrens nach einem der Ansprüche 1 bis 10 auszuführen.

**Claims**

1. Fraud-detecting method for authenticating that an object is covered with human skin by means of a biometric system for analysing whether an object to be authenticated is covered with human skin, said system comprising a sensor (1) of papillary prints, said sensor comprising:

   - a propagation medium (2) comprising a surface (3) with a receiving location intended to receive the object to be authenticated,
   - a light source (6) configured to illuminate the receiving location of the surface through the propagation medium with incident light rays that have propagated through the propagation medium (2),
   - an imager (4) configured to receive light rays that have propagated through the propagation medium from the surface (3),

   said object (5) having a refractive index and being placed in a receiving location on the surface (3) of the propagation medium (2) of the sensor (1), said propagation medium (2) having a refractive index $n_{medium}$, the method comprising the following steps:

   - illuminating the receiving location of the surface (3) through the propagation medium (2) with incident light rays (20, 22) that have propagated through the propagation medium (2) from the light source (6), said incident light rays (20, 22) illuminating the receiving location making to said surface a plurality of angles of incidence ($\alpha_1$, $\alpha_2$) encompassing at least one critical angle defined by the refractive index $n_{medium}$ of the propagation medium (2) and by a refractive index expected for an authentic human skin,
   - receiving by means of the imager (4) of light rays that have propagated through the propagation medium (2) from the surface (3), said light rays originating from incident light rays making to the surface (3) angles of incidence ($\alpha_1$) smaller than or equal to a critical angle defined by the refractive index $n_{medium}$ of the propagation medium (2) and by the refractive index of the object (5) to be authenticated, and acquiring an image with the imager (4), said image having a spatial light distribution dependent at least on the refractive index of the object (5),
   - based on the acquired image, determining a light-intensity profile dependent on a distance to the light source (6), the light-intensity profile being representative of the spatial light distribution in the acquired image dependent on a distance to the light source, said light-intensity profile depending on the refractive index of the object (5),
   - determining at least one characteristic derived from the light-intensity profile and dependent on the refractive index of the object (5),
   - determining the correspondence between the object (5) and an authentic human skin by comparing the characteristic derived from the light-intensity profile to a reference characteristic representative of a light-intensity profile corresponding to a spatial distribution expected for an authentic human skin, said reference characteristic depending on a refractive index expected for an authentic human skin, and
   - authenticating or not that the object is covered with human skin depending on the determined correspondence.

2. Method according to the preceding claim, wherein the reference characteristic corresponds to a light path comprising a critical angle defined by the refractive index $n_{medium}$ of the propagation medium (2) and by a refractive index expected for an authentic human skin.

3. Method according to one of the preceding claims, wherein the characteristic derived from the light-intensity profile is representative of a decrease in light intensity in the light-intensity profile.

4. Method according to the preceding claim, wherein the characteristic derived from the light-intensity profile is a position of decrease in light intensity in the light-intensity profile, and the reference characteristic is a reference position.

5. Method according to the preceding claim, wherein the position of decrease is compared to an attenuation range bounded by a first reference position corresponding to a maximum refractive index expected for an authentic human skin and a second reference position corresponding to a minimum refractive index expected for an authentic human skin, and

   - the object is determined to be covered with authentic human skin if the position of decrease is located in the attenuation range,
   - the object is determined as not being an authentic human finger if the position of decrease is located outside the attenuation range.

6. Method according to any one of the preceding claims, wherein the refractive index expected for authentic human skin is lower than or equal to a maximum expected refractive index $n_{max}$ and the plurality of angles of incidence made by the light rays comprises angles of incidence $\alpha$ larger than

$$sin^{-1}\left(\frac{n_{max}}{n_{medium}}\right)$$

with $n_{max}$ lower than or equal to 1.48 and higher than or equal to 1.42.

7. Method according to any one of the preceding claims, wherein the refractive index expected for authentic human skin is higher than or equal to a minimum expected refractive index $n_{min}$ and the plurality of angles of incidence made by the light rays comprises angles of incidence $\alpha$ smaller than

$$sin^{-1}\left(\frac{n_{min}}{n_{medium}}\right)$$

with $n_{min}$ higher than or equal to 1.38 and lower than or equal to 1.44.

8. Method according to any one of the preceding claims, wherein the derived characteristic is a shape of the light-intensity profile, and determining the correspondence between the object (5) and an authentic human skin comprises comparing the shape of the light-intensity profile with a plurality of reference profiles corresponding to known optical characteristics, said known optical characteristics comprising at least refractive indices.

9. Method according to one of Claims 1 to 8, wherein the incident light rays (20, 22) illuminating the receiving location of the surface (3) are of wavelengths shorter than 600 nm.

10. Method according to the preceding claim, wherein some incident light rays (20, 22) illuminating the receiving location of the surface (3) are of wavelengths shorter than 600 nm, and other incident light rays (20, 22) illuminating the receiving location of the surface (3) are of wavelengths longer than 600 nm.

11. Biometric system for analysing whether an object to be authenticated is covered with human skin, comprising a sensor (1) of papillary prints, said sensor comprising:

   - a propagation medium (2) comprising a surface (3) with a receiving location intended to receive the object to be authenticated,
   - a light source (6) configured to illuminate the receiving location of the surface through the propagation medium with incident light rays that have propagated through the propagation medium (2), said incident light rays (20, 22) intended to illuminate the receiving location making to said surface (3) a plurality of angles of incidence ($\alpha_1$, $\alpha_2$) encompassing at least one critical angle defined by the refractive index $n_{medium}$ of the propagation medium and by a refractive index expected for an authentic human finger,
   - an imager (4) configured to receive light rays that have propagated through the propagation medium from the surface (3), said light rays originating from incident light rays making to the surface (3) angles of incidence ($\alpha_1$) smaller than or equal to a critical angle defined by the refractive index $n_{medium}$ of the propagation medium (2) and by the refractive index of the object (5) to be authenticated, and to acquire an image, the system being configured to implement the fraud-detecting method according to one of Claims 1 to 10.

12. Computer program product comprising program-code instructions that cause the biometric system according to Claim 11 for analysing whether an object to be authenticated is covered with human skin to execute the steps of the method according to one of Claims 1 to 10.

**FIG 1**

**FIG 2**

**FIG 3**

**FIG 4**

**FIG 5**

## FIG 6

## FIG 7

## FIG 8

**EP 3 614 305 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2849246 A1
- US 2016275335 A1
- US 9400916 B1
- FR 2862408
- FR 2861200